Europäisches Patentamt

European Patent Office

Office européen des brevets

(19)

(11) Numéro de publication : **0 311 486 B1**

(12) **FASCICULE DE BREVET EUROPEEN**

(45) Date de publication du fascicule du brevet :
**21.11.91 Bulletin 91/47**

(51) Int. Cl.⁵ : **G11B 11/10**

(21) Numéro de dépôt : **88402440.7**

(22) Date de dépôt : **27.09.88**

(54) Dispositif de lecture optique et d'écriture magnétique d'un support d'informations.

(30) Priorité : **05.10.87 FR 8713739**

(43) Date de publication de la demande :
**12.04.89 Bulletin 89/15**

(45) Mention de la délivrance du brevet :
**21.11.91 Bulletin 91/47**

(84) Etats contractants désignés :
**DE FR GB IT NL**

(56) Documents cités :
**EP-A- 0 123 048**
**EP-A- 0 168 699**
**DE-A- 3 334 120**
**FR-A- 1 523 756**
**US-A- 4 029 944**
**PATENT ABSTRACTS OF JAPAN, vol. 7, no.
245 (P-233)[1390], 29 octobre 1983, page 98 P
233; & JP-A-58 130 458 (SHARP K.K.) 03-
08-1983**

(56) Documents cités :
**PATENT ABSTRACTS OF JAPAN, vol. 10, no.
143 (P-459)[2200], 27 mai 1986, page 23 P 459;
& JP-A-60 261 052 (FUJITSU K.K.) 24-12-1985
PATENT ABSTRACTS OF JAPAN, vol. 8, no.
211 (P-303)[1648], 26 septembre 1984, page 88
P 303; & JP-A-59 94 257 (OLYMPUS KOGAKU
KOGYO K.K.) 30-05-1984**

(73) Titulaire : **BULL S.A.**
**121 avenue de Malakoff P.B. 193.16**
**F-75764 Paris Cédex 16 (FR)**

(72) Inventeur : **Bernstein, Pierre**
**11, rue du Haut-Boutron Saint-Germain-en
Laye**
**F-78640 Neauphle-Le-Chateau (FR)**

(74) Mandataire : **Gouesmel, Daniel et al**
**BULL S.A. Industrial Property Department
P.C.: HQ 8M006 B.P. 193.16 121 avenue de
Malakoff**
**F-75764 Paris Cédex 16 (FR)**

## Description

La présente invention concerne un dispositif de lecture optique et d'écriture magnétique d'un support d'informations. Elle est notamment applicable à la lecture et à l'écriture d'informations sur les disques magnétiques d'une mémoire à disque magnétooptique.

Les mémoires à disques magnétooptiques sont des mémoires où les informations sont enregistrées sur des disques magnétiques et lues par des dispositifs optoélectroniques. L'évolution technologique est telle que l'on tend à utiliser de telles mémoires car elles permettent d'obtenir des densités radiales de l'ordre de quelques milliers de pistes par centimètre et des densités longitudinales de 10.000 informations par centimètre.

Leur mode de fonctionnement repose sur l'effet magnétooptique qui concerne l'interaction d'une lumière polarisée rectiligne avec l'état magnétique du matériau constituant la couche d'enregistrement des disques magnétiques. La lecture des informations est effectuée par un dispositif optoélectronique comprenant un dispositif optique de focalisation plus ou moins complexe associé à des transducteurs photoélectroniques et des circuits d'amplification des signaux délivrés par ces transducteurs. Ces dispositifs optoélectroniques permettent d'observer à un moment donné, en un endroit donné, une face d'un disque au moyen d'un faisceau de lumière polarisé et de délivrer un signal électrique dont la tension (ou le courant) est fonction de la valeur des informations situées à cet endroit. Le brevet français 2.514.913 déposée par la Compagnie Internationale pour l'Informatique CII HONEYWELL BULL le 16 octobre 1981 donne de plus amples détails sur l'effet magnétooptique et sur la manière dont peuvent être lues les informations contenues sur des disques magnétiques d'une mémoire magnétooptique. (Le brevet US correspondant est le brevet 4,510,544).

Plus précisément, le dispositif de lecture optoélectronique décrit dans le brevet mentionné ci-dessus comprend :

— une source lumineuse émettant un faisceau de lumière polarisé sur la surface du disque magnétooptique en un endroit déterminé de celui-ci dont l'interaction avec l'état magnétique du disque en cet endroit produit une rotation du plan de polarisation de la lumière,

— des moyens optiques pour focaliser le faisceau sur la surface du disque, dont la trace sur celui-ci forme un spot lumineux et qui est réfléchi par le disque puis transmis par ceux-ci à un élément séparateur séparant le faisceau incident du faisceau réfléchi,

— et des moyens de détection de l'angle de rotation du plan de polarisation de la lumière délivrant un signal électrique dont la tension (ou le courant) est fonction de la valeur de l'information située à cet endroit.

Ainsi qu'il est indiqué dans ce même brevet, les moyens de focalisation, ainsi que l'élément séparateur et les moyens de détection de l'angle de rotation du plan de polarisation sont disposés sur une plateforme pouvant se déplacer par rapport aux pistes du disque, plate-forme qui comprend un bras-support solidaire d'un ressort de suspension qui porte un patin (appelé corps principal dans le brevet en question) contenant un transducteur magnétique d'écriture des informations du disque. Le patin vole au-dessus de celui-ci à une distance de quelques dixièmes de microns. La source de lumière polarisée n'est pas disposée sur la plate-forme.

La demande de brevet européen de numéro de publication 0115458 déposée le 23 janvier 1984 avec une priorité française du 25 janvier 1983, par la Compagnie Internationale pour l'Informatique CII HONEYWELL BULL (le brevet US correspondant est le 4,633,450), décrit un perfectionnement du dispositif décrit dans le brevet français ci-dessus mentionné, dans lequel l'écriture est effectuée par un transducteur magnétique et la lecture est effectuée par un dispositif optique de focalisation placé à l'intérieur d'un logement pratiqué à l'intérieur du patin (corps principal). Ce patin est du type Winchester à faible charge et est par exemple constitué par un catamaran comprenant au moins deux rails ou skis et une rainure disposée entre ceux-ci. L'optique de focalisation est placée à l'intérieur de l'un des deux rails. L'optique de focalisation est située à une distance du support d'informations supérieure ou égale à la hauteur de vol du patin par rapport au disque magnétique. Ainsi, du fait même des conditions de vol du patin au-dessus du disque magnétooptique, qui maintiennent la face de celui-ci qui est en regard du disque à une distance de ce dernier dont l'amplitude de fluctuation est inférieure à la profondeur de champ de l'optique de focalisation, on voit que en disposant celle-ci d'une manière appropriée vis-à-vis du disque magnétooptique à l'intérieur de ce patin, la focalisation de cette optique peut être rendue constante pendant tout le temps que dure le vol du patin au-dessus du disque magnétooptique. Cela permet d'éviter l'utilisation d'un dispositif d'asservissement de focalisation lourd et coûteux.

Dans la pratique du métier, on cherche à relire au moyen du dispositif optique de lecture, les informations écrites par le transducteur magnétique d'écriture aussitôt après que celles-ci aient été enregistrées. On améliore ainsi considérablement le temps d'accès à ces informations écrites sur le disque magnétooptique, tout en se réservant la possibilité de réécrire des informations considérées comme erronées aussitôt après avoir décelé qu'elles le sont au moyen du dispositif optique de lecture. Ceci est très important pour l'écriture d'informations dans une mémoire magnétooptique où le taux d'erreurs brut est non négligeable et est estimé de l'ordre de $10^{-5}$ (une information erronée pour $10^5$ informations écrites). Cela nécessite, qu'en permanence, le pôle d'écriture du transducteur magnétique d'écriture et le spot lumineux soient en regard de la même piste. Or, la largeur des pistes étant de l'ordre de deux microns, et la largeur du spot étant de l'ordre du micron, il n'est pas possible de tolérer que, au cours des opérations d'écriture et de lecture, le spot lumineux se déplace par rapport au pôle d'écriture de plus d'un demi-micron, de part et d'autre du milieu de la piste que l'on est en train d'écrire et de lire, sous peine d'être en regard de la piste voisine de cette dernière.

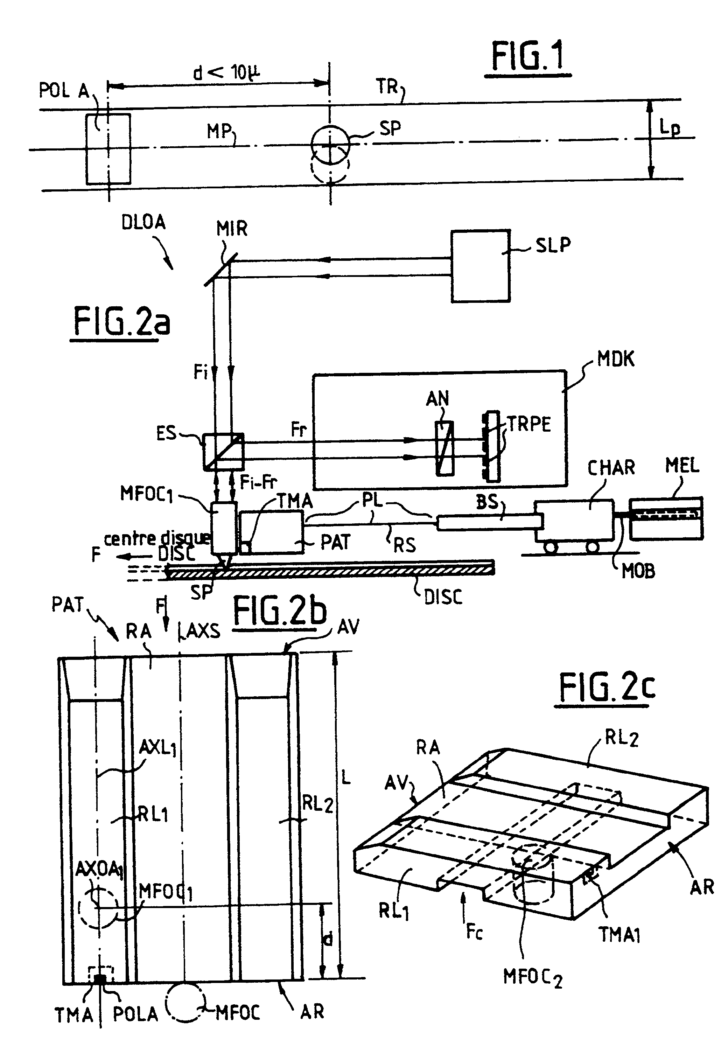

Or, tout dispositif de lecture optique et d'écriture magnétique est confronté aux deux problèmes suivants, illustrés par la figure 1 :

— en raison de la courbure relativement forte des pistes du disque, dû au faible diamètre de celles-ci (de l'ordre de quelques centimètres) on peut montrer par le calcul, que la distance d entre le pôle d'écriture POLA du transducteur magnétique d'écriture et le spot lumineux SP doit rester inférieure à une dizaine de microns pour que ces derniers restent disposés en regard de la même piste,

— par ailleurs, le patin qui porte la lentille de focalisation et le transducteur magnétique d'écriture est animé d'un mouvement de rotation (et également de translation, mais ce phénomène est moins important) par rapport au faisceau lumineux (la source lumineuse émettant ce dernier étant placée à l'extérieur de la plate-forme) en raison du voile du disque et des irrégularités de surface qu'il présente, ce qui peut occasionner des déplacements du spot lumineux par rapport au milieu MP de la piste TR.

L'inconvénient des dispositifs de lecture optique décrits dans le brevet et la demande de brevet ci-dessus mentionnés est que l'exigence de précision de positionnement du spot lumineux par rapport au pôle d'écriture établi ci-dessus ne peut être satisfaite. En effet, en raison des problèmes évoqués ci-dessus, le faisceau lumineux peut se déplacer de quelques microns, voire quelques dizaines de microns par rapport au pôle d'écriture, et se trouver ainsi en regard d'une piste différente de celle en regard de laquelle se trouve le pôle d'écriture. Dans ces conditions, il est alors nécessaire de déplacer la plate-forme de telle sorte que le dispositif de lecture se trouve disposé en regard de la piste qui a été écrite par le transducteur magnétique. Le temps d'accès aux informations qui viennent d'être écrites s'en trouve d'autant augmenté.

La présente invention permet de remédier à cet inconvénient en utilisant les dispositions suivantes :

— utiliser une lentille holographique comme lentille de focalisation, les avantages de la lentille holographique étant connus et mentionnés par exemple dans le document DE-A-3334120, à savoir petite dimension et légèreté,

— disposer les différents éléments constituant le dispositif optique de lecture sur le patin contenant le transducteur magnétique d'écriture et rendre ces différents éléments fixes les uns par rapport aux autres, de telle sorte que la distance entre le spot lumineux et le pôle d'écriture du transduceur magnétique soit de l'ordre de ou inférieur à une dizaine de microns.

Selon l'invention, le dispositif de lecture optique et d'écriture magnétique d'informations sur un support d'enregistrement magnétooptique qui comprend:

— un transducteur magnétique d'écriture des informations sur le support disposé sur un patin volant au-dessus du support, sur la face arrière de celui-ci,

— une source de lumière émettant un faisceau de lumière polarisé sur la surface du support en un endroit déterminé de celui-ci dont l'interaction avec l'état magnétique du support en cet endroit produit une rotation du plan de polarisation de la lumière,

— des moyens optiques pour focaliser le faisceau sur la surface du support, dont la trace sur ce dernier forme un spot lumineux, et qui est réfléchi par le support puis transmis par ceux-ci à un élément séparateur séparant le faisceau incident du faisceau réfléchi, ces moyens étant disposés sur le patin,

— des moyens de détection de l'angle de rotation du plan de polarisation de la lumière délivrant un signal électrique dont la tension (ou courant) est fonction de la valeur de l'information située en cet endroit, la lumière polarisée parvenant au patin par l'intermédiaire d'au moins une fibre optique, est caractérisé en ce que les moyens optiques de focalisation sont constitués par une lentille holographique fixée sur la partie supérieure du patin et faisant un angle voisin de 45° avec la surface de cette partie, de telle sorte que la distance entre le spot lumineux produit par la lentille holographique sur le support et le pôle d'écriture soit de l'ordre de ou inférieur à une dizaine de microns.

Dans une forme de réalisation préférée de l'invention, le plan des couches minces constituant le transducteur magnétique d'écriture fait avec la normale au support d'enregistrement magnétooptique un angle égal au demi-angle d'ouverture du faisceau de lumière incident produit par la lentille holographique.

D'autres caractéristiques et avantages de la présente invention apparaîtront dans la description suivante donnée à titre d'exemple non limitatif et en se référant aux figures annexées.

Sur ces dessins :

• La figure 1 montre les exigences que doit satisfaire le dispositif de lecture optique et d'écriture magnétique selon l'invention, en ce qui concerne le déplacement du spot lumineux par rapport au pôle d'écriture du transducteur magnétique d'écriture d'une part et par rapport au milieu d'une piste écrite, d'autre part.

• La figure 2 composée des figures 2a, 2b et 2c montre un dispositif de lecture optique et d'écriture magnétique d'un support d'informations magnétooptique, selon l'art antérieur tel que décrit dans le brevet français cité.

• La figure 3 est une vue de côtée montrant le dispositif de lecture optique et d'écriture magnétique d'informations sur un support d'enregistrement magnétooptique selon l'invention.

• La figure 4 est une vue de dessus montrant le dispositif de lecture optique et d'écriture magnétique selon l'invention.

• La figure 5 est une autre forme de réalisation du dispositif selon l'invention.

Pour mieux comprendre comment est constitué le dispositif de lecture optique et d'écriture magnétique selon l'invention, il est utile d'effectuer quelques rappels illustrés par les figures 2a, 2b, 2c montrant un dispositif de lecture optique selon l'Art Antérieur, tel que décrit soit dans le brevet français n° 2.514.913 précité soit dans la demande de brevet européen n° 40115458 précitée. Le dispositif de lecture optique DLOA selon l'Art Antérieur montré à la figure 2a et 2b comprend :

— la source de lumière polarisée (de préférence monochromatique) SLP émettant un faisceau de lumière incident $F_i$,

— le miroir MIR,

— l'élément séparateur ES,

— des moyens de focalisation MFOC du faisceau lumineux incident $F_i$ sur le disque magnétooptique DISC, lequel est réfléchi par ce dernier et devient le faisceau réfléchi $F_r$ : la trace du faisceau lumineux $F_i$ sur le disque DISC forme le spot lumineux SP,

— des moyens de détection MDK par "effet Kerr" des informations binaires enregistrées sur chaque piste du disque magnétooptique DISC.

La source de lumière SLP envoie le faisceau lumineux $F_i$ sur le disque magnétooptique DISC par l'intermédiaire successivement du miroir MIR, de l'élément séparateur ES, des moyens de focalisation MFOC (ceux-ci sont généralement constitués par une lentille focalisatrice). Le faisceau réfléchi $F_r$ est tel que son vecteur champ électrique a subi une rotation $\pm \theta_k$ par effet Kerr (voir brevet 2.514.913) par rapport au vecteur champ électrique du faisceau incident $F_i$. Ce faisceau $F_r$ est envoyé à travers les moyens de focalisation MFOC et l'élément séparateur ES aux moyens de détection MDK. Ceux-ci comprennent, de manière connue, un analyseur de lumière AN associé à une pluralité de transducteurs photoélectroniques. L'élément analyseur AN a une direction priviligiée de propagation de la lumière faisant un angle donné avec le vecteur champ électrique du faisceau $F_i$. La puissance lumineuse recueillie par l'analyseur AN est transformée par les transducteurs photoélectroniques (eux-mêmes associés à des circuits électroniques amplificateurs non représentés pour simplifier à la figure 1a) en un signal électrique dont la tension (ou le courant) est fonction de la valeur des informations binaires enregistrées sur le disque DISC à l'emplacement où se trouve le spot lumineux SP.

Ainsi qu'il est indiqué dans le brevet français 2.514.913 précité, de préférence, la plupart des éléments du dispositif de lecture DLOA sont montés sur une plate-forme PL, à l'exception de la source de lumière polarisée SLP. Cette plate-forme PL comprend le bras support BS fixé par l'une de ses extrémités par exemple un chariot mobile CHAR extérieur au disque DISC. Ce chariot mobile est lui-même solidaire de la partie mobile MOB d'un moteur électrodynamique linéaire MEL. L'autre extrémité du bras support BS est solidaire d'un ressort de suspension RS lequel porte un patin volant PAT. Ce patin comprend par exemple un transducteur électromagnétique d'écriture des informations du disque DISC. Ce transducteur est désigné par TMA. La structure du patin volant PAT est connue. Elle est rappelée aux figures 2b, 2c qui sont respectivement des vues de dessous et en perspective de ce patin.

A la figure 2b, le support d'informations, à savoir le disque DISC est supposé défiler dans le sens de la flèche F. Le patin PAT est supposé être de type catamaran, c'est-à-dire comprenant deux rails $RL_1$ et $RL_2$ séparés par une rainure RA. On appelle avant AV du patin PAT, la partie de celui-ci qui voit la première dans le temps défiler les informations devant elle, alors qu'on appelle arrière AR de la tête, la partie de celle-ci qui voit la dernière dans le temps défiler les informations devant elle. On appelle AXS l'axe de symétrie longitudinal du patin PAT (c'est-à-dire l'axe parallèle au sens de défilement F des informations).

Le patin PAT comprend, ainsi qu'il a été indiqué plus haut, un transducteur magnétique d'écriture TMA disposé à l'arrière AR de celui-ci, par exemple sur le rail $RL_1$. Le transducteur TMA a un pôle d'écriture POLA.

Dans le mode de réalisation décrit dans le brevet français 2.514.913 précité, les moyens de focalisation MFOC sont disposés sur l'axe de symétrie AXS et à l'arrière du patin PAT, de telle sorte que ces moyens voient dans le temps défiler devant eux les informations de chaque piste du disque qui ont été écrites précédemment par le transducteur TMA.

Dans la forme de réalisation préférée décrite dans la demande de brevet européenne précitée, les moyens optiques de focalisation $MFOC_1$ représentés en traits interrompus à la figure 2b et 2c sont disposés à l'intérieur d'un logement pratiqué dans le rail $RL_1$. L'axe de symétrie longitudinal des moyens de focalisation est confondu avec l'axe de symétrie longitudinal du transducteur magnétique d'écriture TMA lui-même confondu avec l'axe de symétrie longitudinal $AXL_1$ du rail $RL_1$ lui-même parallèle à l'axe de symétrie AXS.

La distance entre l'axe optique $AXOA_1$ des moyens de focalisation $MFOC_1$, perpendiculaire au plan du disque DISC et le pôle d'écriture POLA, à savoir d est de l'ordre de quelques diziêmes de millimètres, voire un millimètre.

La surface totale des rails $RL_1$ et $RL_2$ constitue la surface de vol du patin PAT. La force due à la pression de l'air sur cette surface lorsque le disque DISC défile dans le sens de la flèche en regard du patin PAT, est équilibrée par une force de chargement, encore appelée charge $F_c$ de l'ordre d'une dizaine de grammes.

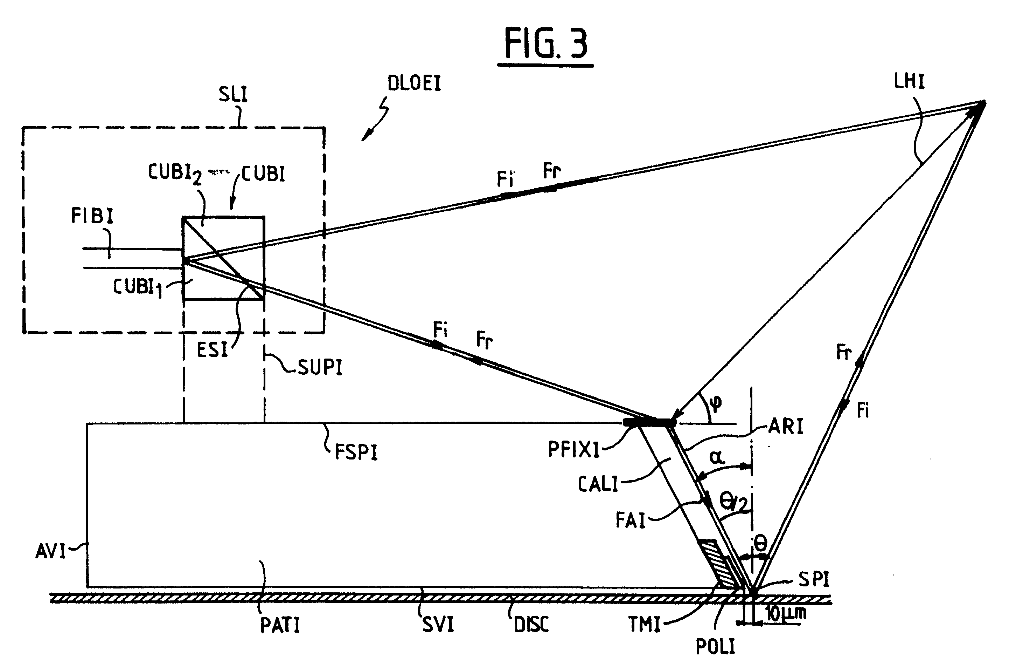

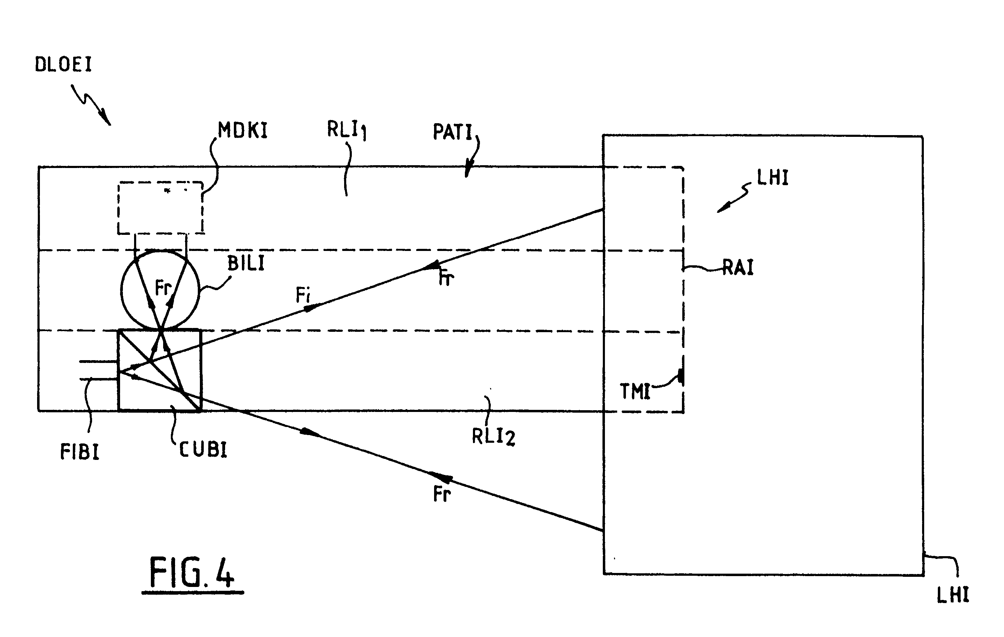

Le dispositif de lecture optique et d'écriture magnétique d'informations sur un support d'enregistrement magnétooptique selon l'invention montré aux figures 3 et 4 permet de résoudre les problèmes mentionnés ci-dessus, illustrés par la figure 1.

Ce dispositif DLOEI selon l'invention comprend, ainsi qu'on peut le voir aux figures 3 et 4 :
— la source de lumière polarisée SLI formée par l'association d'une fibre optique de type multimode FIBI et d'un cube CUBI à séparation de polarisation, le coefficient de couplage entre la fibre et le cube étant très élevé,
— la lentille holographique LHI formant les moyens de focalisation du faisceau incident $F_i$ produit par la source de lumière SLI,
— des moyens de transmission BILI qui transmettent le faisceau réfléchi $F_r$ produit par la lentille holographique LHI,
— les moyens de détection par effet Kerr MDKI recevant le faisceau transmis par les moyens BILI délivrant un signal dont la tension/courant est fonction de la valeur des informations enregistrées sur le disque magnétooptique DISC,
— le transducteur magnétique d'écriture des informations sur le disque DISC, disposé sur le patin volant PATI.

La source de lumière SLI, la lentille holographique LHI, et les moyens de détection par effet Kerr MDKI, ainsi que les moyens de transmission BILI sont fixés sur la face supérieure FSPI du patin PATI. Ainsi, les différents éléments constitutifs du dispositif de lecture optique et d'écriture magnétique DLOEI selon l'invention sont-ils rendus fixes les uns par rapport aux autres, et ce, au moment du montage du dispositif lui-même.

La fibre optique FIBI a une faible ouverture numérique (large diamètre). Elle transporte la lumière qui provient d'une source de lumière non polarisée par exemple une diode laser située à l'extérieur du dispositif DLOEI. Cette fibre est caractérisée par son fort coefficient de couplage avec la source de lumière non polarisée, ce qui implique qu'elle soit de type multimode. On sait que de telles fibres ne conservent pas la direction de polarisation de la lumière. La fibre est en contact par son extrémité avec le cube CUBI. Ce dernier a une taille aussi faible que possible, par exemple un millimètre de côté. Ce cube CUBI est formé par l'association de deux demi-cubes $CUBI_1$ et $CUBI_2$ (en fait deux pyramides).

La lumière sort de la fibre optique en un faisceau divergent et la distance entre l'extrémité de la fibre optique et la lentille holographique est telle que la totalité du faisceau est interceptée par la lentille holographique LHI.

La surface par laquelle les deux demi-cubes $CUBI_1$ et $CUBI_2$ sont en contact constitue l'élément séparateur ESI qui joue le même rôle que l'élément séparateur ES du dispositif selon l'Art Antérieur représenté à la figure 1a, à savoir séparer le faisceau incident $F_i$ du faisceau réfléchi $F_r$.

Le cube CUBI est fixé par exemple par collage sur la partie supérieure FSPI du patin PATI, collage formant le support du cube SUPI.

Le cube a la fonction suivante : il sépare les chemins de propagation du faisceau incident $F_i$ et du faisceau $F_r$ réfléchi par le disque magnétooptique, suivant deux directions perpendiculaires, la première étant celle du faisceau incident $F_i$. Selon cette direction, le cube ne laisse passer qu'une lumière ayant une direction de polarisation déterminée. La seconde est celle du faisceau réfléchi $F_r$. Suivant cette seconde direction, le faisceau réfléchi est dirigé vers les détecteurs photoélectroniques. C'est cette lumière qui porte l'information.

La lentille holographique LHI a la forme d'un rectangle plat dont les dimensions sont par exemple d'une longueur de six millimètres, une largeur de quatre millimètres et une épaisseur d'un millimètre.

La lentille holographique est utilisée de préférence à un ensemble formé par une association d'un miroir et d'une lentille focalisatrice conventionnelle tels que le miroir MIR et la lentille MFOC de la figure 1a. En effet, les dimensions, la légèreté et la faible hauteur de vol de la plateforme (inférieure au micromètre) posent des problèmes de compatibilité avec la taille, la masse et le tirage optique des lentilles focalisatrices conventionnelles.

L'utilisation de lentilles holographiques pour la lecture optique d'informations est connue : elle est décrite par exemple dans la demande de brevet européenne 86301994.9 (N° publication 0195657) déposée par la Société Fujitsu, désignant notamment la France et dans le brevet US 4,626,679.

La lentille holographique LHI est montée par l'intermédiaire de pattes de fixation PFIXI sur la face supérieure FSPI du patin PATI.

La lentille LHI fait un angle $\varphi$ de l'ordre de 45° avec la face supérieure FSPI du patin PATI.

La lentille holographique LHI produit le faisceau incident $F_i$ dont l'ouverture est désignée par l'angle $\theta$. Le spot SPI produit par ce faisceau sur la surface du disque DISC a un diamètre de l'ordre du micromètre.

A noter par exemple, que la lentille holographique LHI peut être une lentille produite par "le Centre Suisse d'Electronique et de Microtechnique S.A." dont le siège est à Neuchâtel en Suisse.

Le faisceau réfléchi $F_r$ a les mêmes dimensions et le même angle d'ouverture que le faisceau indicent $F_i$ aussi bien avant qu'après la traversée de la lentille holographique LHI.

Le patin PATI, a la même structure générale que le patin PAT du dispositif selon l'Art Antérieur montré aux figures 1a, 1b, 1c. Il a donc une structure en forme de catamaran comportant deux rails $RLI_1$ et $RLI_2$ séparés par une rainure RAI. L'avant du patin est désigné par AVI et l'arrière ARI.

Par rapport au patin PAT des figures 1a à 1c, le patin PATI se distingue de ce dernier par la structure de sa partie arrière ARI. En effet, la face arrière FAI de ce dernier qui comprend le transducteur TMI est inclinée d'un angle $\alpha$ par rapport à la normale au plan du disque DISC. Cet angle $\alpha$ est égal à la moitié de l'angle d'ouverture du faisceau $F_i$ (ou $F_r$). On a donc $\alpha = \theta/2$.

Le transducteur TMI est un transducteur intégré en couches minces d'un type parfaitement connu, par exemple décrit dans la demande de brevet français n° 2575577 déposée le 28 décembre 1984 par la Compagnie Internationale pour l'Informatique CII HONEYWELL BULL, (brevet US correspondant 4771350) ou encore fabriqué par la Société américaine READ RITE de MILPITAS en Californie aux USA. Le plan des couches minces du transducteur TMI est lui aussi incliné d'un angle $\alpha$ par rapport à la normale au plan du disque DISC. Le transducteur TMI est noyé dans une couche, par exemple réalisé en alumine CALI, qui constitue de fait la partie arrière ARI du patin PATI.

L'épaisseur, la largeur et la longueur du patin sont calculées en fonction des dimensions des différents éléments optiques constituant le dispositif de lecture DLOEI selon l'invention, ainsi que de leurs caractéristiques optiques.

Le faisceau réfléchi $F_r$ par la lentille holographique LHI vient se réfléchir sur la surface ESI et est envoyé sous forme d'un faisceau divergent aux moyens de transmission BILI. Ceux-ci le transforment en un faisceau sensiblement cylindrique. Ces moyens de transmissions BILI peuvent être constitués par une bille optique d'un millimètre de diamètre, c'est-à-dire, ayant sensiblement un diamètre de dimension égale aux côtés du cube CUBI. La bille BILI est par exemple collée d'une part sur la face supérieure FSPI du patin PATI et d'autre part sur l'une des faces latérales du cube CUBI.

De préférence, les circuits constituant les moyens de détection MDKI formés par un ensemble de transducteurs photoélectroniques et les circuits amplificateurs qui leur sont associés, peuvent être déposés sur la surface supérieure FSPI du patin PATI sous forme d'un circuit à très haute intégration VLSI.

Le réglage optique permettant d'optimiser les performances optiques et le trajet optique des faisceaux $F_i$ et $F_r$ est effectué lors du montage du dispositif DLOEI selon l'invention. Une fois le réglage effectué, les differents éléments constitutifs du dispositif DLOEI, à savoir la fibre optique FIBI, le cube CUBI et la lentille holographique LHI, la bille BILI et les moyens MDKI sont collés sur la surface supérieure FSPI, par exemple en envoyant un faisceau de rayon ultraviolet sur une colle photosensible.

Ainsi, on réalise un dispositif dont tous les éléments sont fixes les uns par rapport aux autres, ce qui permet au faisceau lumineux $F_i$, de rester à distance constante du pôle d'écriture POLI du transducteur PMI.

Par ailleurs, le fait que la partie arrière ARI du patin PATI est inclinée d'un angle $\alpha$ égal à la moitié de l'angle d'ouverture du cône de focalisation $F_i$ de la lumière, permet d'éviter toute réflexion parasite du faisceau lumineux sur les parois du patin PATI.

Par ailleurs, les dimensions et la masse des différents éléments FIBI, CUBI et LHI sont tout-à-fait compatibles avec un vol stable du patin PATI, puisque leur masse est de l'ordre de quelques centièmes de grammes, alors que la force de chargement du patin PATI est de l'ordre de la dizaine de grammes.

L'invention concerne donc un dispositif de lecture particulièrement simple permettant d'éviter l'asservissement de la position du faisceau de lecture par rapport à la pièce polaire d'écriture, ce qui serait nécessaire si les différents éléments constituant le dispositif de lecture optique n'étaient pas fixes les uns par rapport aux autres.

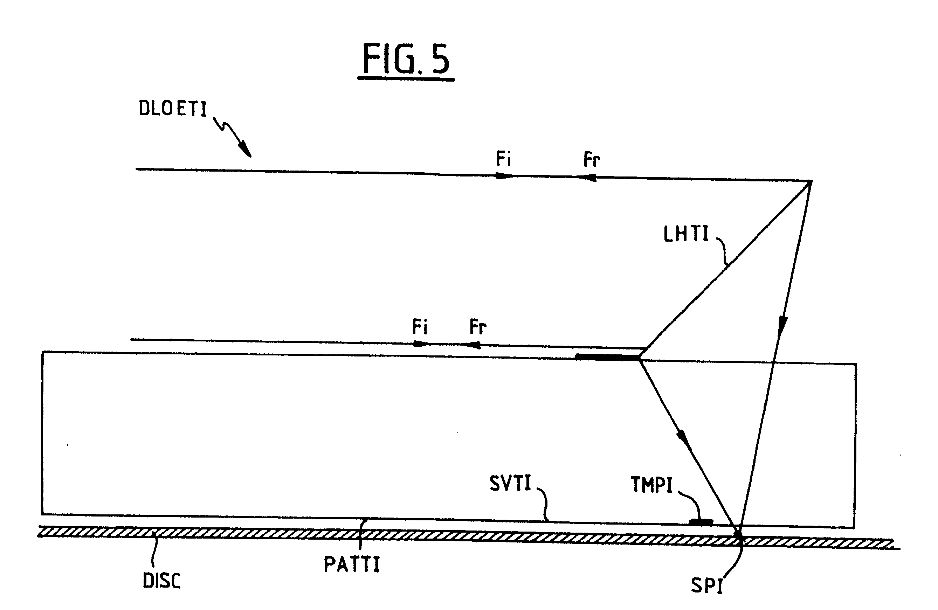

La figure 5 montre une autre forme de réalisation DLOETI du dispositif de lecture optique et d'écriture magnétooptique selon l'invention, dont tous les éléments constitutifs, source de lumière, cube, bille, moyens de détection, lentille holographique (ici désignée par LHTI) sont identiques à ceux du dispositif DLOEI, à l'exception du patin PATTI qui est de forme parallélépipédique classique (voir par exemple Fig. 1b) mais est transparent à la lumière. Quant au transducteur d'écriture TMPI, il est réalisé en couches minces et déposé à plat sur la surface de vol SVTI du patin, et est par exemple du type décrit dans le brevet français 2559294 déposé le 3 février 1984. (Brevet US correspondant n° 4731157).

## Revendications

1. Dispositif de lecture optique et d'écriture magnétique d'informations (DLOEI) sur un support d'enregistrement magnétooptique (DISC) comprenant :

— un transducteur (TMI) magnétique d'écriture des informations sur le support disposé sur un patin volant (PATI) au-dessus du support, sur la face arrière de celui-ci,

— une source de lumière (SLI) émettant un faisceau de lumière polarisé ($F_i$) sur la surface du support en un endroit déterminé de celui-ci dont l'interaction avec l'état magnétique du support en cet endroit produit une rotation du plan de polarisation de la lumière,

— des moyens optiques (LHI) fixés sur le patin pour focaliser le faisceau ($F_i$) sur la surface du support, dont la trace sur celui-ci forme un spot lumineux (SPI), et est réfléchi sur le support en devenant le faisceau ($F_r$), lequel est transmis par ceux-ci à :

    • un élément séparateur (ESI) séparant le faisceau incident ($F_i$) du faisceau réfléchi ($F_r$),

    • des moyens de détection de l'angle de rotation du plan de polarisation de la lumière (MDKI) délivrant un signal électrique dont la tension/courant est fonction de la valeur de l'information située en cet endroit, la lumière polarisée parvenant au patin par l'intermédiaire d'au moins une fibre optique, caractérisé en ce que les moyens optiques de focalisation sont constitués par une lentille holographique (LHI) fixée sur la partie supérieure (FSPI) du patin (PATI) et faisant un angle voisin de 45° avec la surface de cette partie, de telle sorte que la distance entre le spot lumineux (SPI) produit par la lentille holographique (LHI) sur le support et le pôle d'écriture soit de l'ordre de ou inférieure à une dizaine de microns.

2. Dispositif selon la revendication 1, caractérisé en ce que la source de lumière est formée par l'association d'une fibre optique (FIBI) dont l'extrémité est collée sur une face d'un cube optique (CUBI).

3. Dispositif suivant la revendication 2, caractérisé en ce que le faisceau réfléchi transmis par la lentille holographique (LHI) est envoyé sur le cube lequel le transmet au moyen de détection (MDKI) par l'intermédiaire de moyens de transmission (BILI) transformant le faisceau divergent produit par le cube en un faisceau sensiblement cylindrique.

4. Dispositif suivant la revendication 3, caractérisé en ce que les moyens de transmission (BILI) sont constitués par une bille optique.

5. Dispositif suivant l'une quelconque des revendications 1 à 4, caractérisé en ce que les moyens de détection (MDKI) sont fixés sur la partie supérieure du patin.

6. Dispositif suivant l'une quelconque des revendications 1 à 5, caractérisé en ce que l'angle que fait la face arrière (FAI) du patin (PATI) avec la normale au plan du support d'enregistrement magnétooptique (DISC) est égal au demi-angle d'ouverture du cône formé par le faisceau incident $F_i$.

7. Dispositif selon l'une quelconque des revendications 1 à 3, caractérisé en ce que le patin (PATI) est transparent à la lumière.

## Patentansprüche

1. Vorrichtung zum optischen Lesen und zum magnetischen Schreiben von Informationen (DLOEI) auf einen magnetooptischen Datenträger (DISC), mit:

— einem magnetischen Wandler (TMI) für die auf den Träger geschriebenen Informationen, der auf einem oberhalb des Trägers befindlichen beweglichen Gleiter (PATI) auf der Rückseite desselben angeordnet ist,

— einer Lichtquelle (SLI), die auf die Oberfläche des Trägers an einer bestimmten Stelle desselben ein Bündel polarisierten Lichts ($F_i$) aussendet, dessen Wechselwirkung mit dem magnetischen Zustand des Trägers an dieser Stelle eine Drehung der Polarisationsebene des Lichts erzeugt,

— optischen Mitteln (LHI), die am Gleiter befestigt sind, um das Bündel ($F_i$) auf der Oberfläche des Trägers zu fokussieren, wobei die Spur des Bündels auf dem Träger einen Lichtfleck (SPI) ausbildet und vom Träger reflektiert wird und dabei das Bündel ($F_r$) erzeugt, das von den optischen Mitteln übertragen wird an :

    • ein Trennelement (ESI), das das einfallende Bündel ($F_i$) vom reflektierten Bündel ($F_r$) trennt,

    • Mittel zur Erfassung des Winkels der Drehung der Polarisationsebene des Lichts (MDKI), die ein elektrisches Signal liefern, dessen Spannung/Strom eine Funktion des Werts der an dieser Stelle befindlichen Information ist, wobei das polarisierte Licht den Gleiter über wenigstens eine dazwischengeschaltete Lichtleitfaser erreicht, dadurch gekennzeichnet, daß die optischen Mittel zur Fokussierung von einer holographischen Linse (LHI) gebildet werden, die am oberen Teil (FSPI) des Gleiters (PATI) befestigt sind und mit der Oberfläche dieses Teils einen Winkel von ungefähr 45° bilden, derart, daß der Abstand zwischen dem von der holographischen Linse (LHI) auf dem Träger erzeugten Lichtfleck (SPI) und dem Schreibpol in der Größenordnung von 10 Mikrometern oder weniger liegt.

2. Vorrichtung gemäß Anspruch 1, dadurch gekennzeichnet, daß die Lichtquelle durch die Verbindung mit einer Lichtleitfaser (FIBI) gebildet ist, deren Ende mit einer Seite eines optischen Würfels (CUBI) verklebt ist.

3. Vorrichtung gemäß Anspruch 2, dadurch gekennzeichnet, daß das von der holographischen Linse (LHI) übertragene reflektierte Bündel an den Würfel geschickt wird, der es an das Er?ssungsmittel (MDKI) über dazwischengeschalte? ?bertragungsmittel (BILI) überträgt, die das vom Würfel erzeugte divergierende Bündel in ein im wesentlichen zylindrisches Bündel umformen.

4. Vorrichtung gemäß Anspruch 3, dadurch gekennzeichnet, daß die Übertragungsmittel (BILI) von einer optischen Kugel gebildet werden.

5. Vorrichtung gemäß einem der Ansprüche 1 bis 4, dadurch gekennzeichnet, daß die Erfassungsmittel (EDKI) am oberen Teil des Gleiters befestigt sind.

6. Vorrichtung gemäß einem der Ansprüche 1 bis 5, dadurch gekennzeichnet, daß der Winkel, den die Rückseite (FAI) des Gleiters (PATI) mit der Normalen der Ebene des magnetooptischen Aufzeichnungsträgers bildet, gleich dem halben Öffnungswinkel des vom einfallenden Bündel ($F_i$) gebildeten Kegels ist.

7. Vorrichtung gemäß einem der Ansprüche 1 bis 6, dadurch gekennzeichnet, daß der Gleiter (PATI) lichtdurchlässig ist.

## Claims

1. A device (DLOEI) for optical reading and magnetic writing of data on a magnetooptic recording carrier (DISC) including :
— a transducer (TMI) for magnetic writing of data on the carrier disposed on a head (PATI) flying above the carrier, on the trailing face thereof ;
— a light source (SLI) emitting a beam of polarized light ($F_i$) onto the surface of the carrier at a predetermined site thereon, the interaction of which with the magnetic state of the carrier at this site produces a rotation of the plane of polarization of the light ;
— optical means (LHI) affixed to the head for focusing the beam ($F_i$) onto the surface of the carrier, the path of which thereon forms a light spot (SPI), and is reflected on the carrier, becoming the beam ($F_r$) which is transmitted thereby to :
— a separator element (ESI) separating the incident beam ($F_i$) from the reflected beam ($F_r$) ; and
— means (MDKI) for detecting the angle of rotation of the plane of polarization of the light, furnishing an electric signal the voltage/current of which is a function of the value of the data located at this site, the polarized light arriving at the head via at least one optical fibre, characterized in that the optical focusing means comprise a holographic lens (LHI) affixed to the upper portion (FSPI) of the head (PATI) and forming an angle of approximately 45° with the surface of this portion, so that the distance between the light spot (SPI) produced by the holographic lens (LHI) on the support and the writing pole is of the order of, or less than, ten microns.

2. A device according to claim 1, characterized in that the light source is formed by the association of an optical fibre (FIBI) the end of which is glued to one face of an optical cube (CUBI).

3. A device according to claim 2, characterized in that the reflected beam transmitted by the holographic lens (LHI) is sent to the cube, which transmits it to the detection means (MDKI) via transmission means (BILI) transforming the divergent beam produced by the cube into a substantially cylindrical beam.

4. A device according to claim 3, characterized in that the transmission means (BILI) comprise an optical ball.

5. A device according to any one of claims 1 to 4, characterized in that the detection means (MDKI) are affixed to the upper portion of the head.

6. A device according to any one of claims 1 to 5, characterized in that the angle that the trailing face (FAI) of the head (PATI) forms with the normal to the plane of the magnetooptic recording carrier (DISC) is equal to one-half the opening angle of the cone formed by the incident beam ($F_i$).

7. A device according to any one of claims 1 to 6, characterized in that the head (PATI) is transparent to light.

EP 0 311 486 B1

## FIG.1

## FIG.2a

## FIG.2b

## FIG.2c

FIG.3

FIG.4

EP 0 311 486 B1

# FIG. 5

EP 0 311 486 B1